# EUROPEAN PATENT APPLICATION

(11) **EP 4 220 792 A1**
(43) Date of publication of application: **02.08.2023**
(21) Application number: 22215034.4
(22) Date of filing: 20.12.2022
(51) Int. Cl.: H01M 10/04, H01M 10/052, H01M 50/46, H01M 50/586, H01M 50/59

(54) **SECONDARY BATTERY**

(30) Priority: 20.01.2022 KR 20220008441
(71) Applicant: Samsung SDI Co., Ltd., Yongin-si, Gyeonggi-do 17084 (KR)
(72) Inventor: CHOI, Bum Kuk, 17084 Yongin-si (KR)
(74) Representative: Marks & Clerk LLP

(57) **Abstract**

A secondary battery includes: an electrode assembly including: a negative electrode plate; a positive electrode plate; and a separator interposed between the negative electrode plate and the positive electrode plate; a bond on one surface of the electrode assembly perpendicular to a surface of the separator to fix the separator; a case accommodating the electrode assembly; a negative electrode lead drawn out from the negative electrode plate; and a positive electrode lead drawn out from the positive electrode plate.

## Description

### BACKGROUND

### 1. Field

Aspects of embodiments of the present disclosure relate to a secondary battery.

### 2. Description of the Related Art

Unlike primary batteries that are not rechargeable, secondary batteries may be charged and discharged. Low-capacity secondary batteries are widely used in small sized portable electronic devices, such as mobile phones, camcorders, and the like, while large-capacity secondary batteries are typically used for driving motors of hybrid automobiles, electric automobiles, and the like. Secondary batteries are classified into a cylindrical type, a prismatic type, and a polymer type according to an external shape thereof. In the case of the polymer type, an electrode assembly is wrapped by using a pouch, and thus, may have high energy density and reduced use of space, but may be relatively vulnerable to an external impact.

The above information disclosed in this Background section is for enhancement of understanding of the background of the present disclosure, and therefore, it may contain information that does not constitute prior art.

### SUMMARY

One or more embodiments of the present disclosure are directed to a secondary battery having improved safety.

According to one or more embodiments of the present disclosure, a secondary battery includes: an electrode assembly including: a negative electrode plate; a positive electrode plate; and a separator interposed between the negative electrode plate and the positive electrode plate; a bond on one surface of the electrode assembly perpendicular to a surface of the separator to fix the separator; a case accommodating the electrode assembly; a negative electrode lead drawn out from the negative electrode plate; and a positive electrode lead drawn out from the positive electrode plate.

In an embodiment, the separator may include a plurality of separators, the electrode assembly may be stacked in an order of the negative electrode plate, one separator from among the plurality of separators, the positive electrode plate, and another separator from among the plurality of separators, and the bond may cover at least two adjacent separators from among the plurality of separators.

In an embodiment, the at least two adjacent separators may have ends that are gathered together, and the bond may be applied on edges of the ends.

In an embodiment, the electrode assembly may be wound in an elongated circle shape to have a flat portion defined by two opposite flat outer surfaces, and curved portions connecting the two opposite flat outer surfaces to each other from one side and an opposite side, respectively, and the bond may be located on the flat portion.

In an embodiment, the bond may be spaced from the curved portions.

In an embodiment, the bond may be located on an outer portion of the electrode assembly.

In an embodiment, the bond may be spaced from an edge of the electrode assembly.

In an embodiment, the bond may be applied along a winding direction.

In an embodiment, the bond may be applied in a form of dots.

In an embodiment, the bond may be divided into a plurality of sections.

In an embodiment, the bond may be located in a plurality of rows.

In an embodiment, the bond may include a fluorescent material.

In an embodiment, the bond may be applied across a winding direction.

In an embodiment, the bond may be linearly applied.

In an embodiment, the bond may cover an area of the one surface as a whole.

At least some of the above and other features of the invention are set out in the claims.

### BRIEF DESCRIPTION OF DRAWINGS

The above and other aspects and features of the present disclosure will be more clearly understood from the following detailed description of the illustrative, nonlimiting embodiments with reference to the accompanying drawings.
FIG. 1 schematically shows an exploded state of a secondary battery according to an embodiment of the present disclosure.
FIG. 2 schematically shows a lower surface of an electrode assembly of a secondary battery according to an embodiment of the present disclosure.
FIG. 3 schematically shows a cross-section taken along the line III-III in FIG. 2.
FIG. 4A is a view illustrating a drop test result for an electrode assembly of a secondary battery according to an embodiment of the present disclosure.
FIG. 4B is a view illustrating a drop test result for an electrode assembly of a secondary battery according to a comparative example.
FIGS. 5-9 schematically show a lower surface of an electrode assembly of a secondary battery according to various other embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the terms "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

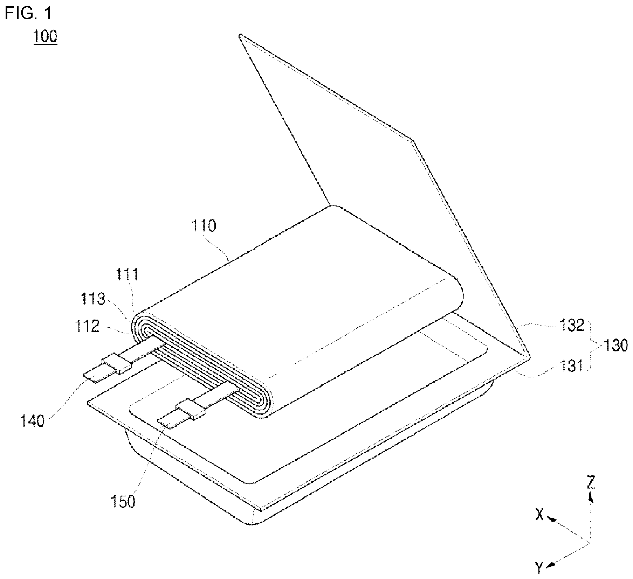

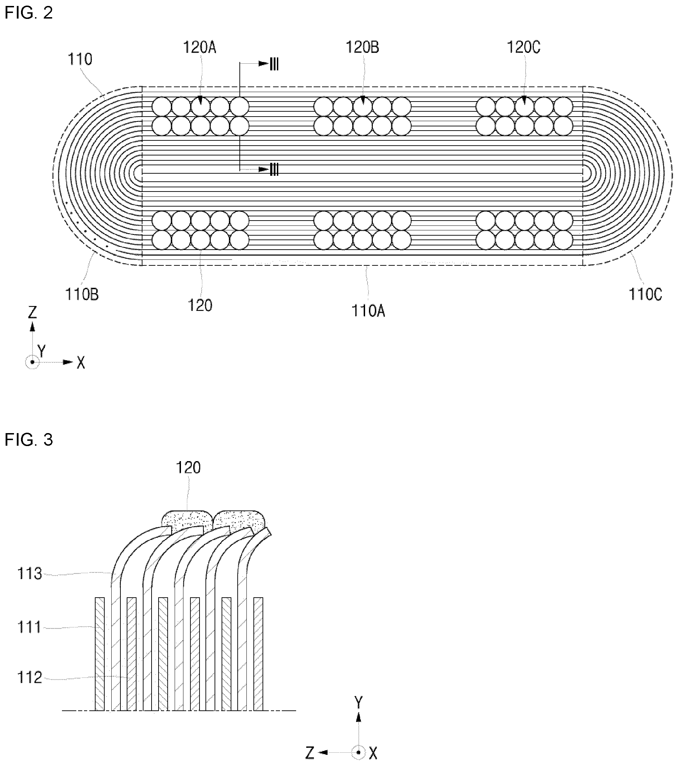

FIG. 1 schematically shows an exploded state of a secondary battery 100 according to an embodiment of the present disclosure. FIG. 2 schematically shows a lower surface of an electrode assembly 110 of the secondary battery 100 according to an embodiment of the present disclosure. FIG. 3 schematically shows a cross-section taken along the line III-III in FIG. 2.

Referring to FIG. 1, the secondary battery 100 according to an embodiment of the present disclosure includes an electrode assembly 110, a bond 120 (e.g., see FIG. 2), a case 130, a negative electrode lead 140, and a positive electrode lead 150.

The electrode assembly 110 includes a negative electrode plate 111, a positive electrode plate 112, and a separator 113.

The negative electrode plate 111 may include a negative electrode coated portion and a negative electrode uncoated portion. The negative electrode coated portion may include a negative electrode active material coated on a negative electrode current collector plate. The negative electrode current collector plate may include (e.g., may be made of), for example, a thin conductive metal plate, for example, such as copper or nickel foil or mesh, but the present disclosure is not limited thereto. The negative electrode uncoated portion may not be coated with a negative electrode active material. The negative electrode active material may include, for example, but is not limited to, a carbon-based material, Si, Sn, tin oxide, a tin alloy composite, a transition metal oxide, lithium metal nitrite, or a metal oxide.

The positive electrode plate 112 may include a positive electrode coated portion and a positive electrode uncoated portion. The positive electrode coated portion may include a positive electrode active material coated on a positive electrode current collector plate. The positive electrode current collector plate may include (e.g., may be made of), for example, a highly conductive thin metal plate, for example, such as aluminium foil or mesh, but the present disclosure is not limited thereto. The positive electrode uncoated portion may not be coated with a positive electrode active material. The positive electrode active material may include, but is not limited to, a chalcogenide compound, for example, such as a composite metal oxide, such as LiCoO₂, LiMn₂O₄, LiNiO₂, LiNiMnO₂, or the like.

The separator 113 is interposed between the negative electrode plate 111 and the positive electrode plate 112, to prevent or substantially prevent an electrical short between the negative electrode plate 111 and the positive electrode plate 112. The separator 113 may include, for example, but is not limited to, polyethylene, polypropylene, a porous copolymer of polyethylene and polypropylene, or the like. In addition, in order to effectively prevent an electrical short between the negative electrode plate 111 and the positive electrode plate 112, the separator 113 may be formed to be wider (e.g., in a y-axis direction) than the negative electrode plate 111 and the positive electrode plate 112 (e.g., see FIG. 3). In other words, when the negative electrode plate 111, the separator 113, and the positive electrode plate 112 are stacked in that order, an edge of the separator 113 may protrude more (e.g., in the y-axis direction) than edges of the negative electrode plate 111 and the positive electrode plate 112.

The electrode assembly 110 may be divided into a so-called winding type and a stack type according to a manufacturing method. In the drawings, the electrode assembly 110 is illustrated as a winding type by way of example. Hereinafter, for convenience, the electrode assembly 110 will be described in more detail in the context of a winding type with reference to the drawings.

In this case, the electrode assembly 110 is stacked in the order of the negative electrode plate 111, the separator 113, the positive electrode plate 112, and the separator 113, and then is wound around one axis. Here, the electrode assembly 110 may be wound as a whole in an elongated circular or oval shape when viewed in a plane perpendicular to or substantially perpendicular to the axis. Hereinafter, in the electrode assembly 110, a portion having two opposing flat or substantially flat outer surfaces is referred to as a flat portion 11 0A, a portion connecting the outer surfaces to each other at one side (e.g., the left side in the drawing) is referred to as a first curved portion 110B, and a portion connecting the outer surfaces to each other at another side (e.g., the right side in the drawing) is referred to as a second curved portion 110C (e.g., see FIG. 2).

The bond 120 is applied to one surface (e.g., one end in the y-axis direction) of the electrode assembly 110 that is perpendicular to or substantially perpendicular to the separator 113, or in other words, the upper surface (e.g., an upper end) and/or the lower surface (e.g., a lower end) of the electrode assembly 110, and serves to fix the separator 113. Although the bond 120 is illustrated as being applied to the lower surface of the electrode assembly 110, the bond 120 may also be applied to the upper surface of the electrode assembly 110. For convenience, with reference to the drawings, the bond 120 will be described in more detail as being applied to the lower surface of the electrode assembly 110. However, the bond 120 applied to the upper surface of the electrode assembly 110 may be the same or substantially the same as the bond 120 applied to the lower surface of the electrode assembly 110, and thus, redundant description thereof may not be repeated.

The bond 120 may be applied to cover at least two neighboring separators 113 to fix the separators 113 together.

In more detail, the separators 113 may gather together at the lower surface of the electrode assembly (e.g., in the y-axis direction), and the bond 120 may be applied on the edges of the separators 113 (e.g., see FIG. 3). Accordingly, the bond 120 may be prevented or substantially prevented from flowing into the electrode assembly 110 to unintentionally contaminate the negative electrode plate 111 and the positive electrode plate 112.

Here, it may be difficult to uniformly or substantially uniformly collect (e.g., gather) the separators 113 due to the curvature of the first curved portion 110B and the second curved portion 110C. Therefore, for ease of manufacture, the bond 120 may be applied to the flat portion 110A. For example, the bond 120 may be applied so as to be spaced apart by about 4 mm from the first curved portion 110B and the second curved portion 110C.

However, in another embodiment, the bond 120 may be applied to the first curved portion 110B and/or the second curved portion 110C.

In addition, in the event of an external impact, the separators 113 at the outer portion of the electrode assembly 110 may be more easily deformed or damaged than at the center portion. Therefore, it may be desirable for the bond 120 to be applied closer to the outer portion of the electrode assembly 110 (e.g., in the y-axis direction). However, when the bond 120 flows down a side of the electrode assembly 110 over an upper and/or lower surface of the electrode assembly 110, it may be difficult to insert the electrode assembly 110 into the case 130 in a subsequent process. Therefore, it may be desirable to apply the bond 120 so as to be slightly spaced apart from the edge of the electrode assembly 110. For example, the bond 120 may be applied so as to be spaced apart from the edge of the electrode assembly 110 by about 0.1-0.2 mm.

However, in another embodiment, the bond 120 may be applied to the center of the electrode assembly 110, the bond 120 may be applied directly adjacent to the edge of the electrode assembly 110, and/or may be applied on the edge of the electrode assembly 110.

In addition, in order to more securely fix the separators 113 as a whole, the bond 120 may be applied along a winding direction (e.g., the direction in which the edges of the separators 113 are connected to one another).

In this regard, in the drawings, the bond 120 is illustrated as being applied in the form of dots, but the present disclosure is not limited thereto, and in another embodiment, the bond 120 may be linearly applied (e.g., along the winding direction).

In addition, in FIG. 2, the bond 120 is illustrated as being divided at (e.g., in or on) the flat portion 110A into a total of three sections, or in other words, into a section 120A adjacent to the first curved portion 110B, a section 120C adjacent to the second curved portion 110C, and a section 120B located therebetween, and then applied. However, in another embodiment, the bond 120 may be divided into a total of two sections, for example, such as a section 120A adjacent to the first curved portion 110B and a section 120C adjacent to the second curved portion 110C, and may then be applied. In addition, the bond 120 may also be divided and applied to only one section of the two or more sections, and the bond 120 may also be continuously applied from the section 120A adjacent to the first curved portion 110B to the section 120C adjacent to the second curved portion 110C on only one of these areas, from the area 120A adjacent to the first curved portion 110B.

In addition, in FIG. 2, the bond 120 is illustrated as being applied in two rows. However, in another embodiment, for the purpose of reducing the amount of bond used, the bond 120 may be applied in one row, or for the purpose of further fixing the separators 113 in the center, the bond 120 may be applied in three or more rows.

The bond 120 may include a fluorescent material. In this case, by irradiating UV light in a subsequent process, vision inspection may be performed in a state in which the bond is applied or to determine whether or not the bond is contaminated, through whether or not light is emitted. As another example, for vision inspection, the bond 120 itself may have a color different from that of the electrode assembly 110 and/or from those of other adjacent components. The bond 120 may be a glue, for example, a UV glue.

The case 130 accommodates the electrode assembly 110. In more detail, the case 130 includes a first pouch member 131 mainly surrounding (e.g., around a periphery of) one side of the electrode assembly 110, and a second pouch member 132 mainly surrounding (e.g., around a periphery of) an opposite side of the electrode assembly 110. The first pouch member 131 and the second pouch member 132 may be joined (e.g., connected to or attached to each other) along an edge thereof. The first pouch member 131 and the second pouch member 132 may be separately manufactured from each other, or may be integrally manufactured and connected, so as to be foldable with respect to each other. The latter embodiment is illustrated in FIG. 1.

The negative electrode lead 140 is drawn out from the negative electrode plate 111 of the electrode assembly 110, and passes between the first pouch member 131 and the second pouch member 132. In this case, in order to prevent or substantially prevent an electrical short to the case 130, the negative electrode lead 140 may include an insulating member in a portion in contact with the case 130.

The positive electrode lead 150 is drawn out from the positive electrode plate 112 of the electrode assembly 110, and passes between the first pouch member 131 and the second pouch member 132. In this case, in order to prevent or substantially prevent an electrical short to the case 130, the positive electrode lead 150 may include an insulating member in a portion in contact with the case 130.

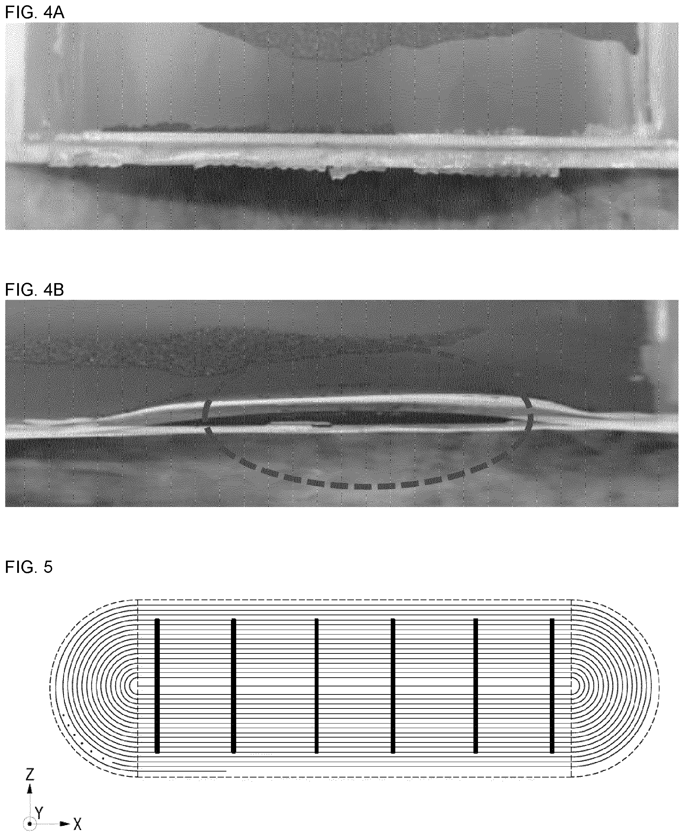

FIG. 4A is a view illustrating a drop test result for the electrode assembly 110 of the secondary battery 100 according to an embodiment of the present disclosure. FIG. 4B is a view illustrating a drop test result for an electrode assembly of a secondary battery according to a comparative example (e.g., an electrode assembly without a bond applied to the upper surface (e.g., the upper end) and/or the lower surface (e.g., the lower end) thereof).

The drop tests were performed on the electrode assembly 110 of the secondary battery 100 according to an embodiment of the present disclosure and the electrode assembly according to the comparative example, under the same conditions, by repeatedly performing free falls 48 times from a height of 1.52 m.

As a result, in the electrode assembly 110 of the secondary battery 100 according to an embodiment of the present disclosure, deformation wrinkles or curling of a separator did not occur.

However, in the electrode assembly according to the comparative example, it was observed that the separator was curled and the negative electrode plate was exposed (e.g., see the portion in FIG. 4B circled with a dotted line). In this case, an electrical short between the negative electrode plate and the positive electrode plate was caused.

Therefore, through the drop tests, in the case of the secondary battery 100 according to an embodiment of the present disclosure, it was confirmed that the electrode assembly 110 may be more effectively protected from external impacts.

FIGS. 5 through 9 schematically show a lower surface of an electrode assembly of a secondary battery according to various other embodiments of the present disclosure.

The embodiments shown in FIGS. 5 through 9 may be different from those described above with reference to FIGS. 1 through 3, in that, instead of the bond 120 being applied along the winding direction of the electrode assembly 110, the bond may be applied across the winding direction of the electrode assembly.

In more detail, referring to FIG. 5, in an embodiment, the bond (e.g., the pattern indicated by a thick line) is applied between two opposing flat or substantially flat outer surfaces of the electrode assembly, and is applied perpendicular to or substantially perpendicular to the winding direction of the electrode assembly. For example, assuming that the bond 120 in the embodiment shown in FIG. 2 is applied in a "-" shape, the bond 120 in the embodiment shown in FIG. 5 may be consisted to be applied in an "I" shape. Similar to the embodiments described above, the bond may be applied in the form of dots, or may be linearly applied.

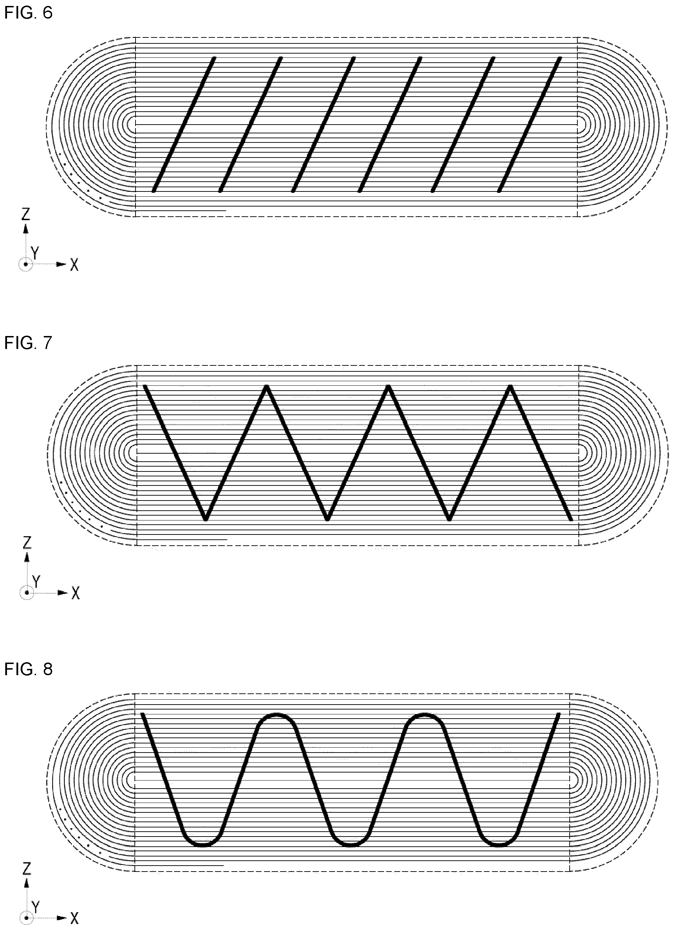

Referring to FIG. 6, in an embodiment, the bond (e.g., the pattern indicated by a thick line) is applied between two opposing flat or substantially flat outer surfaces of the electrode assembly, and is applied diagonally with respect to the winding direction of the electrode assembly. Returning to the above example, the bond 120 in the embodiment shown in FIG. 6 may be considered to be applied in an "/" shape. Similar to the embodiments described above, the bond may be applied in the form of dots, or may be linearly applied.

Referring to FIG. 7, in an embodiment, the bond (e.g., the pattern indicated by a thick line) is applied to a flat or substantially flat portion of the electrode assembly in a zigzag form. For example, depending on viewing angles, the bond may be considered to be applied in a "V" shape, a "W" shape, an "N" shape, an "M" shape, a "Z" shape, and/or the like. Similar to the embodiments described above, the bond may be applied in the form of dots, or may be linearly applied.

While in the embodiment shown in FIG. 7, the bonds are illustrated as being linearly connected, in the embodiment shown in FIG. 8, the bonds (e.g., the pattern indicated by a thick line) are connected in a curved shape (e.g., a curved line). For example, it may be considered that the bond is applied in an 'S' shape depending on the viewing angle. Similar to the embodiments described above, the bond may be applied in the form of dots, or may be linearly applied.

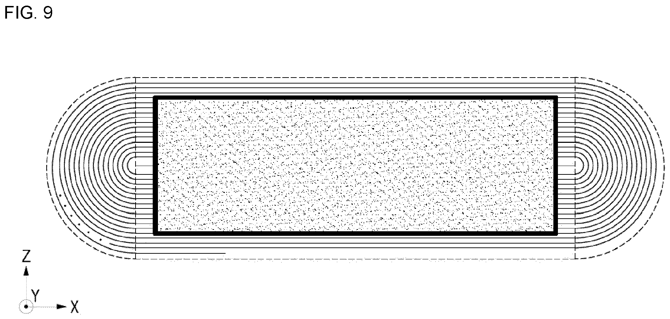

In an embodiment, like in the embodiment shown in FIG. 9, the bond can be applied as a whole over a suitable area (e.g., a predetermined or certain area). In the drawings, the bond is illustrated as being applied within the flat or substantially flat portion of an electrode assembly, but in another embodiment, the bond may be applied over the flat or substantially flat portion, and toward a first curved portion and/or a second curved portion of an electrode assembly.

Features other than the forms in which the bond is applied in the embodiments described above with reference to FIGS. 5 to 9 may be the same or substantially the same as those of the embodiments described above with reference to FIGS. 1 to 3, and thus, redundant description thereof will not be repeated. Some differences therebetween have been mainly described above with reference to FIGS. 5 to 9, and other differences, if any, may be within the extent to which a person having ordinary skill in the art would be expected to naturally modify in response to the corresponding difference.

As described above, in one or more embodiments of the present disclosure, by applying a bond to the upper and/or lower surface of an electrode assembly to fix a separator, an electrical short may be prevented or substantially prevented from occurring between a negative electrode plate and a positive electrode plate due to deformation (e.g., curling of the separator) or damage of the separator by external impacts, thereby providing a secondary battery having improved safety.

Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A secondary battery comprising:
an electrode assembly comprising:
a negative electrode plate;
a positive electrode plate; and
a separator interposed between the negative electrode plate and the positive electrode plate;
a bond on one surface of the electrode assembly perpendicular to a surface of the separator to fix the separator;
a case accommodating the electrode assembly;
a negative electrode lead drawn out from the negative electrode plate; and
a positive electrode lead drawn out from the positive electrode plate.

2. The secondary battery of claim 1, wherein the separator comprises a plurality of separators,
wherein the electrode assembly is stacked in an order of the negative electrode plate, one separator from among the plurality of separators, the positive electrode plate, and another separator from among the plurality of separators, and
wherein the bond covers at least two adjacent separators from among the plurality of separators.

3. The secondary battery of claim 2, wherein the at least two adjacent separators have ends that are gathered together, and the bond is applied on edges of the ends.

4. The secondary battery of any one of claims 1 to 3, wherein the electrode assembly is wound in an elongated circle shape to have a flat portion defined by two opposite flat outer surfaces, and curved portions connecting the two opposite flat outer surfaces to each other from one side and an opposite side, respectively, and
wherein the bond is located on the flat portion.

5. The secondary battery of claim 4, wherein the bond is spaced from the curved portions.

6. The secondary battery of any one of claims 1 to 5, wherein the bond is located on an outer portion of the electrode assembly.

7. The secondary battery of claim 6, wherein the bond is spaced from an edge of the electrode assembly.

8. The secondary battery of claim 4, wherein the bond is applied along a winding direction.

9. The secondary battery of any one of claims 1 to 8, wherein the bond is applied in a form of dots.

10. The secondary battery of any one of claims 1 to 9, wherein the bond is divided into a plurality of sections.

11. The secondary battery of any one of claims 8 to 10, wherein the bond is located in a plurality of rows.

12. The secondary battery of any one of claims 1 to 11, wherein the bond comprises a fluorescent material.

13. The secondary battery of claim 4, wherein the bond is applied across a winding direction.

14. The secondary battery of any one of claims 1 to 8, wherein the bond is linearly applied.

15. The secondary battery of any one of claims 1 to 5, wherein the bond covers an area of the one surface as a whole.
